# EUROPEAN PATENT APPLICATION

(11) **EP 1 975 004 A2**
(43) Date of publication of application: **01.10.2008**
(21) Application number: 08006413.2
(22) Date of filing: 31.03.2008
(51) Int. Cl.: B60R 13/02

(54) **Trim panel and method of manufacturing the same**

(30) Priority: 30.03.2007 US 693810
(71) Applicant: Magna International Inc., Aurora, ON L4G 7K1 (CA)
(72) Inventor: Vanderpool, Vaughn D., Fowlerville, Michigan 48836 (US)
(74) Representative: Deissler, K. Michael

(57) **Abstract**

An interior trim panel (10) includes a skin layer (20), an insert layer (22), and a means (43, 45) for securing the insert layer (22) to the skin layer (20). According to an embodiment, the skin layer (20) includes an A-surface (30) having a sidewall (23) that secures an edge (40) of the insert layer (22). The A-surface (30) includes a serpentitious cross-sectional arrangement (43, 45). A method for manufacturing an interior trim panel (10) is also disclosed.

## Description

### BACKGROUND

### Technical Field

The invention relates to interior trim panels and a method for manufacturing the same.

### Description of Related Art

Interior trim panels are known in the art and are typically utilized for covering structure of, for example, an automotive vehicle. Typically, interior trim panels may include, for example, one or more layers, such as, for example, a substrate or base layer, a foam/cushioning layer, and an aesthetically-pleasing skin or A-surface layer.

Although conventional interior trim panels are known in the art and have been utilized in numerous applications, a manufacturer of novel interior trim components, which are applied to, for example, an automotive interior, typically need to consider the cost of the product against quality of the product in view of global competitive forces that demand reduction in material and manufacturing costs to provide a manufacturer with a profit. As such, there is a need in the art to maintain and/or improve product quality while reducing manufacturing time and number of parts typically associated with interior trim panels, and the like.

### BRIEF DESCRIPTION OF THE DRAWINGS

The present disclosure will now be described, by way of example, with reference to the accompanying drawings, in which:

Figure 1 is an inboard perspective view of an inboard side of an interior trim panel in accordance with an exemplary embodiment of the invention;

Figure 2 is a cross-sectional view of the interior trim panel of Figure 1 according to line 2-2;

Figures 3A-3C illustrate a mold tool and a method for manufacturing an interior trim panel in accordance with an exemplary embodiment of the invention;

Figures 4A-4C illustrate a cross-sectional view of an interior trim panel and mold tool corresponding to the method of manufacturing the interior trim panel of Figures 3A-3C; and

Figure 5 is a perspective, partial cross-sectional view of an interior trim panel and mold tool cavity surface in accordance with an exemplary embodiment of the invention.

### DETAILED DESCRIPTION

The Figures illustrate an exemplary embodiment of an interior trim panel, and method of manufacturing a trim panel in accordance with an embodiment of the invention. Based on the foregoing, it is to be generally understood that the nomenclature used herein is simply for convenience and the terms used to describe the invention should be given the broadest meaning by one of ordinary skill in the art.

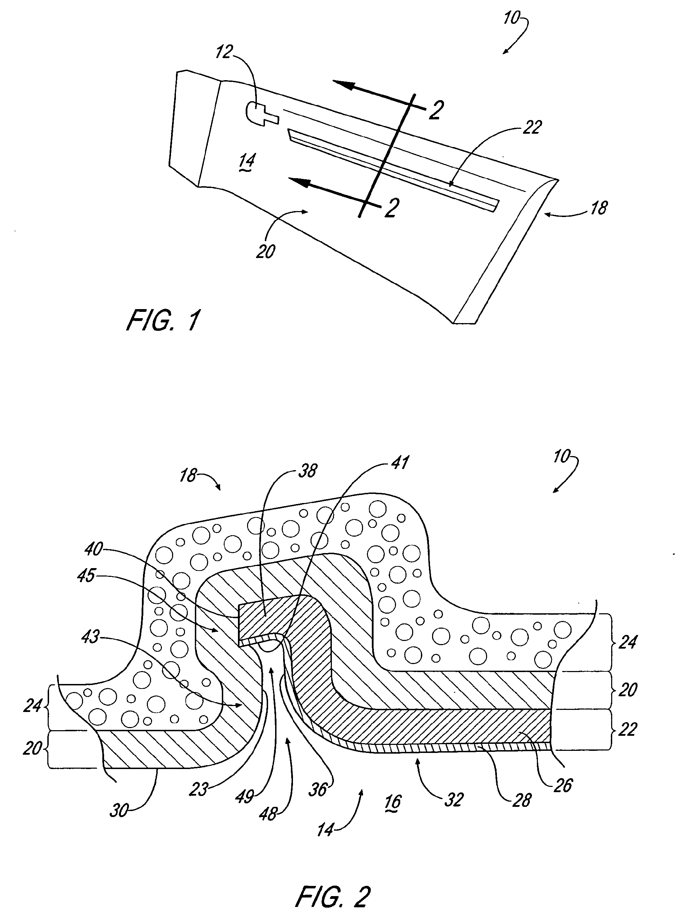

Referring to Figures 1 and 2, an interior trim panel is shown generally at 10 according to an embodiment. As illustrated in Figure 1, the interior trim panel 10 is shaped and dimensioned to form a decorative trim panel for covering structure of, for example, an automotive door (not shown). As such, the interior trim panel 10 may include, among other features, one or more openings shown generally at 12 that provide a vehicle passenger access to, for example, a door handle, door lock controls, window opening/closing switches, and the like (not shown).

As seen in Figures 1 and 2, the interior trim panel 10 generally includes an aesthetically-pleasing inboard surface 14 that faces and is exposed to a passenger compartment area 16 (Figure 2). The interior trim panel 10 also generally includes an outboard surface 18 that faces and is exposed to, for example, vehicle structure, such as, for example, door structure (not shown).

According to an embodiment, as shown in Figure 2, the inboard surface 14 is further defined by an aesthetically-pleasing skin layer 20 and an insert layer 22. According to an embodiment, the skin layer 20 may include a cover stock material, such as, for example, a glass or glass-free thermoplastic material including, for example, structural reaction injection molding (SRIM) material, or the like that is formed to include, for example, an artificial leather having leather texture and feel characteristics. If desired, a show or A-surface 30 of the skin layer may include, for example, a natural fabric, a synthetic fabric, leather, or the like.

If desired, the skin layer 20 may be supported by a base layer 24. According to an embodiment, the base layer 24 may include, for example, a relatively soft, foam layer, and/or a relatively rigidified substrate layer thereby defining a two-, three-, or four-layer structure of the interior trim panel 10. According to an embodiment, the base layer 24 may include a substantially rigid reinforcement mat substrate material comprising, for example, (**MATERIAL NAME HERE**).

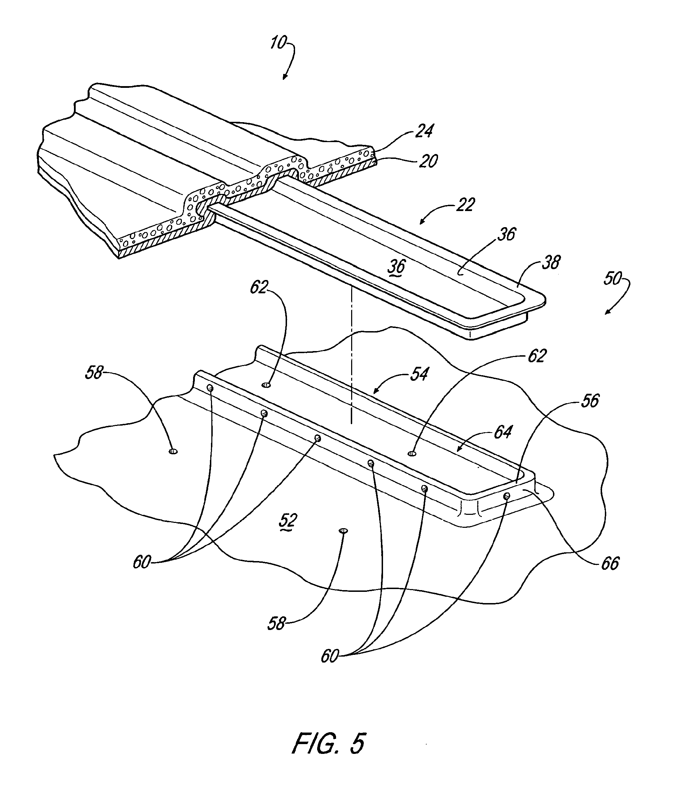

According to an embodiment, the insert layer 22 may include one or more layers that are shown generally at 26 and 28. The first layer 26 may be referred to as a door trim bolster layer whereas the second layer 28 may be referred to as a door trim bolster film layer. According to an embodiment, the door trim bolster film layer 28 may be transparent and/or removable from the door trim bolster layer 26 once the interior trim panel 10 is formed and removed from a mold tool 50, as describe below in association with Figure 5. The door trim bolster layer 26 and/or door trim bolster film layer 28 may be a pre-formed component including any desirable material, such as, for example, a rigid material, including but not limited to a polyester material.

As illustrated in Figure 2, the skin layer 20 and insert layer 22 each includes a show- or A-surface 30, 32, respectively. According the an embodiment, the show- or A-surface 30 of the skin layer may include a substantially different texture and/or color than that of the show- or A-surface 32 of the insert layer 22. According to an embodiment, the show- or A-surface 30 of the skin layer 20 may include, for example, a fabric or leather texture having, for example, a black color whereas the show- or A-surface 32 of the insert layer 22 may include, for example, a relatively smooth plastic surface having, for example, a blue color. Although fabric, leather, or smooth plastic textures and black and blue colors are used to describe the above embodiment of the interior trim panel 10, it will be appreciated that the interior trim panel 10 is not limited to the above described embodiment and that the show- or A-surfaces 30, 32 of the interior trim panel 10 may include any desirable texture, color, material composition, or the like.

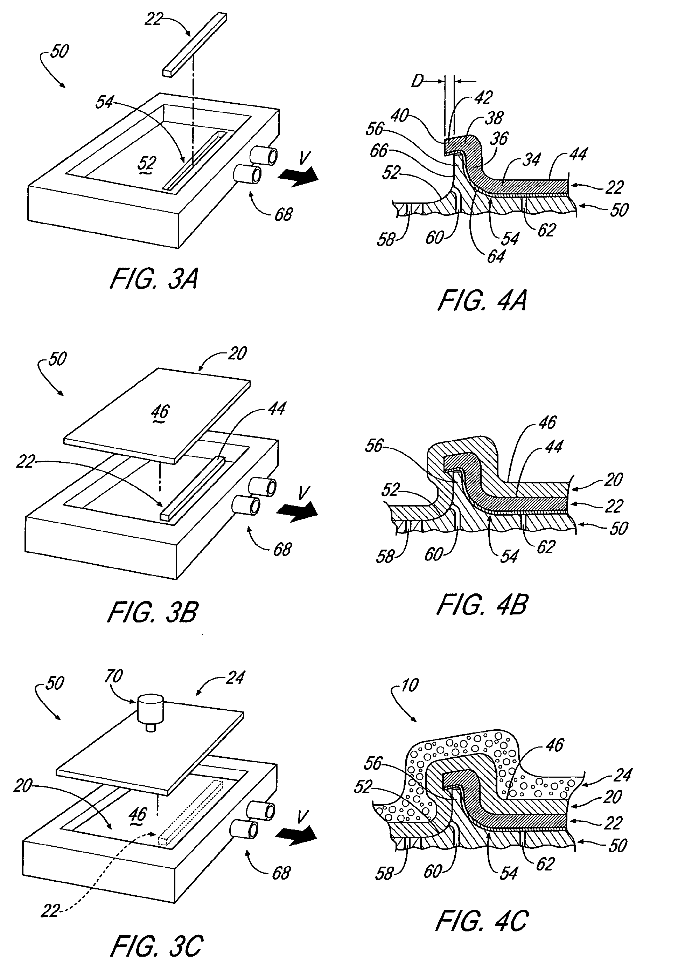

Referring now to Figures 3A-5, a method for manufacturing the interior trim panel 10 is shown according to an embodiment. As illustrated, a mold tool is shown generally at 50 according to an embodiment and includes a cavity surface 52. The cavity surface 52, according to an embodiment, includes an insert nesting portion 54 that includes at least a lip portion 56 (Figures 4A-4C) that extends substantially perpendicularly from the cavity surface 52. In addition, one or more passages 58, 60, 62 (Figures 4A-4C and 5) may be provided in the cavity surface 52 for permitting a vacuum, V, to pull the show- or A-surfaces 30, 32 of the skin layer 20 and/or insert layer 22 against the cavity surface 52.

Referring first to Figures 3A and 4A, a first step in a method of manufacturing the interior trim panel 10 is shown according to an embodiment. As illustrated, the insert layer 22 is provided adjacent the insert nesting portion 54. According to an embodiment, the insert layer 22 is a pre-formed component that is placed adjacent the nesting portion 54. If desired, a vacuum, V, is provided in the passage 62 to pull the insert layer 22 adjacent the cavity surface 52.

Referring to Figure 4A, the insert layer 22 includes, for example, a base portion 34, a sidewall portion 36 that extends substantially perpendicularly from the base portion 34, and a flange portion 38 that extends substantially perpendicularly from the sidewall portion 36. As illustrated, the sidewall portion 36 and flange portion 38 are located substantially adjacent a bowl portion 64 of the insert nesting portion 54.

As illustrated, the sidewall portion 36 extends adjacently in a substantially parallel relationship to the lip portion 56 as the flange portion 38 is adjacently located in a substantially cantilevered relationship to the lip portion 56 such that an edge 40 of the flange portion 38 extends past an edge surface 66 of the lip portion 56. A distance, D, that the edge 40 extends past the edge surface 66 of the lip portion 56 defines an overhang portion 42 of the flange portion 38.

Referring now to Figures 3B and 4B, the skin layer 20 is provided adjacent the cavity surface 52 and an outboard surface 44 of the insert layer 22. If desired, the skin layer 20 may be provided in the mold tool 50 as a pre-formed, heated, sheet of material that may be shaped by the cavity surface 52 during a molding operation when the mold tool 50 is closed. Alternatively, if desired, the material of the skin layer 20 may be injected into the mold tool 50 and formed by the cavity surface 52. According to an embodiment, before, during, or after the skin layer 20 is provided adjacent the cavity surface 52 and/or outboard surface 44 of the insert layer 22, a vacuum, V, from a vacuum source (not shown) may be provided at the passages 58, 60 (see, e.g., Figures 4A and 5) to pull the skin layer 20 against the cavity surface 52. As illustrated, the vacuum, V (Figures 3A-3C), is provided from the vacuum source and is connected to the mold tool 50 at one or more ports 68.

Referring now to Figures 3C and 4C, the base layer 24 is provided adjacent an outboard surface 46 of the skin layer 20. If desired, the base layer 24 may be provided in the mold tool 50 as a pre-formed, heated, sheet of material that may be shaped by the outboard surface 46 of the skin surface 20 as defined by the cavity surface 52 and outboard surface 44 of the insert layer 22 during a molding operation when the mold tool 50 is closed. Alternatively, if desired, rather than being inserted into the mold tool 50 as a pre-formed layer, the base layer 24 may be injected into the mold tool 50.

According to an embodiment, before, during, or after the base layer 24 is provided adjacent the outboard surface 46 of the skin layer 20, a sprue 70 provides a urethane binding agent over the base layer 24 that seeps into the base layer 24 and skin layer 20 disposed in the mold tool 50. Once a shot of the binding agent is provided over the skin layer 20 and base layer 24 that are disposed in the mold tool 50, the mold tool 50 is closed so that the base layer 24 may expand to cause the heated skin layer 20 to be shaped according to the contour of the cavity surface 52 in order to secure the insert layer 22. As illustrated, the base layer 24 may expand in the mold tool in order to be to cause the cross-sectional shape of the skin layer 20 to conform to the cavity surface 52, lip portion 56, and outboard surface 44 of the insert layer 22.

According to an embodiment, the mold tool 50 may be any desirable mold tool. For example, according to an embodiment, the mold tool 50 may be an SRIM mold tool, or, alternatively, a low density structural reaction injection molded (LDSRIM) mold tool. According to an embodiment, the binding agent provided by the sprue 70 of the LDSRIM mold tool 50 may include, for example, an isocynate / polyol chemical mixture. According to another embodiment, the use of a vacuum, V, and vacuum passages 58, 60, 62 may be obviated if, for example, the mold tool 50 is a melt compression molding (MCM) mold tool.

Referring to Figure 5, once the mold tool 50 has been closed for a desired time to permit the base layer 24 to expand so as to shape the skin layer 20, the mold tool 50 may be opened and the interior trim panel 10 may be removed. Referring also to Figure 2, upon removal of the interior trim panel 10 from the mold tool 50, the lip portion 56 extending from the cavity surface 52 provides a clearance or gap 48 that defines a valley 49 defined by the sidewall portion 36 of the insert layer 22 and a sidewall portion 23 of the skin layer 20.

As illustrated, the sidewall portion 23 of the skin layer 20 provides a means for securing the insert layer 22 to the skin layer 20. Specifically, the sidewall portion 23 is defined by a serpentitious cross-sectional arrangement such that the outboard surface 44 of the insert layer 22 as welll as the edge 40 and/or an inboard surface 41 of the flange portion 38 of the insert layer 22 is/are substantially contacted and enveloped by the sidewall portion 23 by way of a three-sided molding-over of the insert layer 22 by way of the sidewall portion 23 of the skin layer 20.

More specifically, the serpentitious cross-sectional arrangement of the sidewall portion 23 includes a plurality of turns or convex/concave portions 43, 45 that resembles a serpentine, snake-like, or S-shape pattern. Thus, upon considering the present disclosure, it will be appreciated, according to an embodiment, that the sidewall portion 23 may contact two or more surface portions of the insert layer 22, such as, for example, the edge 40, inboard surface 41, and/or outboard surface 44 of the insert layer 22. As such, if, for example, the edge 40 and/or inboard surface 41 is defined to include, for example, an unfinished surface that is not suitable for providing a show or A-surface 32, such unfinished surface characteristics may be partially and/or entirely obscured from sight by a passenger in the passenger compartment area 16 due to the relative positioning of the edge 40 and/or inboard surface 41 within the turns or convex/concave portions 43, 45 of the skin layer 20. In addition, the serpentitious cross-sectional arrangement 43, 45 of the sidewall portion 23 of the skin layer 20 provides a sufficient mechanical or frictional connection that secures the skin layer 20 to the insert layer 22 such that a pre- or post-application of an adhesive, fasteners (e.g., heatstakes), or the like is/are eliminated from the structure of the interior trim panel 10.

According to an embodiment, the formation of the turn or convex/concave portions 43 of the skin layer 20 may be formed by during the expansion of the base layer 24. In addition, the formation of the turn or convex/concave portions 43 of the skin layer 20 may be further formed by a vacuum, V, provided by the passage 60, as described in Figures 4B and 5. As illustrated, the passage 60 is formed in or proximate the lip portion 56 of the cavity surface 52. As such, it will be appreciated, upon considering the present disclosure, that the vacuum, V, provided by the passage 60 may cause the formation of the convex/concave portions 43 to thereby further define the other convex/concave portion 45 adjacent the edge 40 so as to provide the serpentitious cross-sectional arrangement 43, 45 of the sidewall portion 23 of the skin layer 20.

Accordingly, the present invention provides an interior trim panel 10 and method for manufacturing the same that eliminates additional components, manufacturing steps, and the costs associated with the same. For example, in the manufacture of conventional interior trim panels, a plurality of heatstakes may be included in a post-molding manufacturing step; as such, prior to inserting the heatstakes, a plurality of passages are provided in the conventional interior trim panel to permit insertion of the heatstakes. Once the heatstakes are inserted, the heatstakes are thermally or ultrasonically deformed so as to secure, for example, a decorative door trim bolster or the like to an interior trim panel. Because additional components, such as, for example, the door trim bolster insert 26 are secured to the skin layer 20 by way of the serpentitious cross-sectional arrangement 43, 45, additional fasteners, such as, for example, heatstakes, as well as the associated post-molding manufacturing step are thereby eliminated.

The present invention has been described with reference to certain exemplary embodiments thereof. However, it will be readily apparent to those skilled in the art that it is possible to embody the invention in specific forms other than those of the exemplary embodiments described above. This may be done without departing from the spirit of the invention. The exemplary embodiments are merely illustrative and should not be considered restrictive in any way. The scope of the invention is defined by the appended claims and their equivalents, rather than by the preceding description.

## Claims

1. An interior trim panel (10), comprising:
a skin layer (20);
an insert layer (22) coupled to the skin layer (20), wherein the skin layer (20) includes an A-surface (30) having a sidewall (23) that secures an edge (40) of the insert layer (22), wherein the A-surface (30) includes a serpentitious cross-sectional arrangement (43, 45).

2. The interior trim panel (10) according to claim 1, wherein the insert layer (22) includes
a base portion (34),
a sidewall portion (36) that extends substantially perpendicularly from the base portion (34), and
a flange portion (38) that extends substantially perpendicularly from the sidewall portion (36).

3. The interior trim panel (10) according to claim 1 further comprising a base layer (24) secured to the skin layer (20).

4. The interior trim panel (10) according to claim 1, wherein the insert layer (22) is a door bolster.

5. An interior trim panel (10), comprising:
a skin layer (20);
an insert layer (22); and
means (43, 45) for securing the insert layer (22) to the skin layer (20).

6. The interior trim panel (10) according to claim 5, wherein the means (43, 45) includes an A-surface (30) of the skin layer (20) having a sidewall (23) defined by a serpentitious cross-sectional arrangement (43, 45) that secures an edge (40) of the insert layer (22) to the A-surface (30) of the skin layer (20).

7. The interior trim panel (10) according to claim 6, wherein the insert layer (22) includes
a base portion (34),
a sidewall portion (36) that extends substantially perpendicularly from the base portion (34), and
a flange portion (38) that extends substantially perpendicularly from the sidewall portion (36).

8. The interior trim panel (10) according to claim 6 further comprising a base layer (24) secured to the skin layer (20).

9. The interior trim panel (10) according to claim 5, wherein the insert layer (22) is a door bolster.

10. A method for manufacturing an interior trim panel (10), comprising the steps of:
providing a mold tool (50) including a cavity surface (52) and an insert nesting portion (54) extending from the cavity surface (52);
providing an insert layer (22) adjacent the insert nesting portion (54), wherein a portion (42) of the insert layer (22) extends away from the nesting portion (54);
providing a skin layer (20) adjacent the cavity surface (52) and an outboard surface (44) of the insert layer (22); and
forming the skin layer (20) to provide a means (43, 45) for securing the insert layer (22) to the skin layer (20) at the portion (42) of the insert layer (22) extending away from the nesting portion (54).

11. The method according to claim 10, wherein the forming step includes enveloping the portion (42) of the insert layer (22) with a serpentitious cross-sectional arrangement (43, 45) of an A-surface (30) of the skin layer (20).

12. The method according to claim 11 further comprising the step of securing an edge (40) of the portion (42) of the insert layer (22) with the serpentitious cross-sectional arrangement (43, 45) of the A-surface (30) of the skin layer (20).

13. The method according to claim 11 further comprising the steps of
providing a base layer (24) adjacent an outboard surface (46) of the skin layer (20); and
forming the base layer (24) to conform to the shape of the outboard surface (46) of the skin layer (20).

14. The method according to claim 13, wherein, prior to the forming the skin layer (20) and forming the base layer (24) steps, providing an isocynate / polyol bind agent chemical mixture into the mold tool (50).

15. The method according to claim 10 further comprising the step of applying a vacuum to at least one of the skin layer (20) and insert layer (22) by way of one or more vacuum passages (58, 60, 62) formed in the cavity surface (52), wherein the vacuum (V) is applied to a sidewall (23) of the skin layer (20) defined by the insert nesting portion (54), wherein at least one or the one or more vacuum passages (60) is formed in the insert nesting portion (54).
